# EUROPÄISCHE PATENTSCHRIFT

(11) **EP 1 791 896 B1**
(45) Veröffentlichungstag und Bekanntmachung des Hinweises auf die Patenterteilung: **13.02.2008**
(21) Anmeldenummer: 05778134.6
(22) Anmeldetag: 08.09.2005
(51) Int. Cl.: C08J 9/00, C08K 5/5313, C08L 25/02

(54) **HALOGENFREIE, FLAMMGESCHÜTZTE POLYMERSCHAUMSTOFFE**
HALOGEN-FREE FLAME-RETARDED POLYMER FOAMS
MOUSSES POLYMERES IGNIFUGES SANS HALOGENE

(30) Priorität: 10.09.2004 DE 102004044380
(43) Veröffentlichungstag der Anmeldung: 06.06.2007
(73) Patentinhaber: BASF Aktiengesellschaft, 67056 Ludwigshafen (DE)
(72) Erfinder: ALLMENDINGER, Markus, 67149 Meckenheim (DE); HAHN, Klaus, 67281 Kirchheim (DE); RUCH, Joachim, 67157 Wachenheim (DE)
(86) Internationale Anmeldenummer: PCT/EP2005/009652
(87) Internationale Veröffentlichungsnummer: WO 2006/027241

(56) Entgegenhaltungen:
- EP-A- 0 834 529
- WO-A-00/12593
- GB-A- 2 362 586
- US-A- 4 742 088

## Beschreibung

Die Erfindung betrifft halogenfreie, flammgeschützte Polymerschaumstoffe, die als Flammschutzmittel eine Phosphorverbindung der allgemeinen Formel (I) 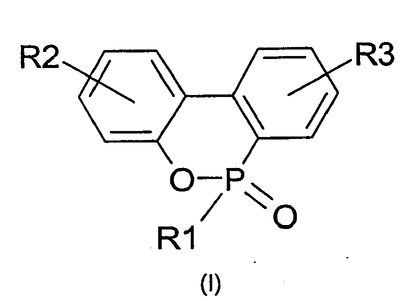 enthalten, wobei
R₁, R₂ und R₃ unabhängig voneinander
H, Methyl, Ethyl, tert-Butyl, Pentyl, Hexyl, Vinyl, Cyclohexyl, α-Methylbenzyl, Phenyl, 1,4-Dihydroxyphenyl, 1,4-Dihydroxy-5-(tert-Butyl)-phenyl, 1,4-Dihydroxynaphtyl bedeuten,
oder das Hydrolyseprodukt oder Metallsalz einer Phosphorverbindung der allgemeinen Formel (I), sowie Verfahren zu ihrer Herstellung.

Die Ausrüstung von Polymerschaumstoffen mit Flammschutzmitteln ist für eine Vielzahl von Anwendungen von Bedeutung, beispielsweise für Polystyrol-Partikelschaumstoffe aus expandierbarem Polystyrol (EPS) oder Polystyrol-Extrusionsschaumstoffplatten (XPS) zum Isolieren von Gebäuden. Dabei werden für Polystyrol-Homo- und Copolymere bisher überwiegend halogenhaltige, insbesondere bromierte organische Verbindungen eingesetzt. Eine Reihe dieser bromierten Substanzen ist jedoch auf Grund ihrer potentiellen Umwelt- und Gesundheitsgefährdung in der Diskussion.

Die EP-A 834 529 beschreibt expandierbare Styrolpolymerisate, die als halogenfreies Flammschutzmittel eine Mischung aus einer Phosphorverbindung und einem wasserabspaltenden Metallhydroxid enthalten. Bevorzugt werden 5 bis 10 Gew.-% Mg(OH)₂ und 5 bis 10 Gew.-% Triphenylphoshat (TPP) in einem Extruder in geschmolzenes Polystyrol eingearbeitet und granuliert und das Granulat in wässriger Suspension mit Treibmittel nachimprägniert.

Die WO 00/34342 beschreibt ein Verfahren zur Herstellung von expandierbarem Polystyrol durch Suspensionspolymerisation von Styrol in Gegenwart von 5 - 50 Gew.-% Blähgraphit und gegebenenfalls 2 bis 20 Gew.-% einer Phosphorverbindung als Flammschutzmittel.

Die Verwendung von 9,10-Dihydro-9-oxa-10-phospha-phenanthren-10-oxid (DOP) und dessen Derivate zur Herstellung von transparenten, flammgeschützten Kunststoffformteilen, beispielsweise aus Expoxyharzen, Polyester wie PET und Styrolpolymeren wie ABS ist aus JP-A 2002-06913 bekannt.

Halogenfreie Flammschutzmittel müssen zur Erreichung der gleichen Flammschutzwirkung von halogenhaltigen Flammschutzmittel in der Regel in deutlich höhere Mengen eingesetzt werden. Deshalb können halogenhaltige Flammschutzmittel, die bei thermoplastischen Polymeren, wie Polystyrol einsetzbar sind, häufig nicht bei Polymerschaumstoffen eingesetzt werden, da sie entweder den Schäumprozess stören oder die mechanischen und thermischen Eigenschaften des Polymerschaumstoffes beeinflussen. Bei der Herstellung von expandierbarem Polystyrol durch Suspensionspolymerisation können außerdem die hohen Flammschutzmittelmengen die Stabilität der Suspension verringern.

Die Wirkung der bei thermoplastischen Polymeren eingesetzten Flammschutzmittel bei Polymerschaumstoffen ist häufig aufgrund des unterschiedlichen Brandverhaltens und unterschiedlicher Brandtests nicht vorhersagbar.

Aufgabe der Erfindung war es daher, ein halogenfreies Flammschutzmittel für Polymerschaumstoffe, insbesondere für expandierbares Polystyrol (EPS) oder Polystyrol-Extrusionsschaumstoffplatten (XPS) zu finden, das den Schäumprozess und die mechanischen Eigenschaften nicht wesentlich beeinflusst und insbesondere die Herstellung von überwiegend geschlossenzelligen Polymerschaumstoffen ermöglicht.

Demgemäss wurde die oben genannte Phosphorverbindung der allgemeinen Formel (I) als Flammschutzmittel für Polymerschaumstoffe gefunden. Die Reste R₁, R₂ und R₃ stehen unabhängig voneinander für H, Methyl, Ethyl, tert.-Butyl, Pentyl, Hexyl, Vinyl, Cyclohexyl, α-Methylbenzyl, Phenyl, 1,4-Dihydroxyphenyl, 1,4-Dihydroxy-5- (tert-Butyl)-phenyl, 1,4-Dihydroxynaphtyl. Bevorzugt wird 9,10-Dihydro-9-oxa-10-phospha-phenantren-10-oxid (6H-Dibenz[c,e]-oxaphosphorin-6-oxid, DOP, CAS-Regno 35948-25-5), dessen Hydrolyseprodukt oder Metallsalz. Die Phosphorverbindungen der Formel (1), deren Hydrolyseprodukte und Metallsalze lassen sich beispielsweise wie in JP-A 2004-035495, JP-A 2002-069313 oder JP-A 2001-115047) beschrieben, herstellen.

Die Phosphorverbindung der allgemeinen Formel (I) wird in der Regel in einer Menge im Bereich von 0,5 bis 25 Gew.-%, bevorzugt im Bereich von 5 bis 15 Gew.-%, bezogen auf den Polymerschaumstoff, eingesetzt.

Die Wirksamkeit der Phosphorverbindung der Formel (1) kann durch den Zusatz geeigneter Flammschutzsynergisten, wie die thermischen Radikalbildner Dicumylperoxid, Ditert-butylperoxid oder Dicumyl noch weiter verbessert werden.

Auch können zusätzlich weiter Flammschutzmitteln, wie Melamin, Melamincyanurate, Metalloxide, Metallhydroxide, Phosphate, Phosphinate oder Synergisten wie Sb₂O₃ oder Zn-Verbindungen eingesetzt werden.

Falls auf die vollständige Halogenfreiheit des Polymerschaumstoffes verzichtet werden kann, können halogenreduzierte Schaumstoffe durch die Verwendung der Phosphorverbindung der Formel (I) und den Zusatz geringerer Mengen an halogenhaltigen, insbesondere bromierten Flammschutzmitteln, wie Hexabromcyclodecan (HBCD), bevorzugt in Mengen im Bereich von 0,05 bis 1, insbesondere 0,1 bis 0,5 Gew.-% hergestellt werden.

Die halogenfreien, flammgeschützten Polymerschaumstoffe weisen bevorzugt eine Dichte im Bereich von 8 bis 200 g/l, besonders bevorzugt im Bereich von 10 bis 50 g/l auf und sind bevorzugt zu mehr als 80 %, besonders bevorzugt zu 95 bis 100% geschlossenzellig.

Bevorzugt enthalten die halogenfreien, flammgeschützten Polymerschaumstoffe ein thermoplastisches Polymer, insbesondere ein Styrolpolymer.

Die erfindungsgemäßen halogenfrei flammgeschützten, expandierbaren Styrolpolymeren (EPS) und Styrolpolymerextrusionschaumstoffen (XPS) können durch Einmischen eines Treibmittels und einer Phosphorverbindung der allgemeinen Formel (I) oder des Hydrolyseproduktes oder eines Metallsalz einer Phosphorverbindung der allgemeinen Formel (1) in die Polymerschmelze und anschließende Extrusion zu Schaumstoffplatten, Schaumstoffsträngen, oder expandierbaren Granulaten hergestellt werden.

Bevorzugt weist das expandierbare Styrolpolymer ein Molekulargewicht im Bereich von 190.000 bis 400.000 g/mol, besonders bevorzugt im Bereich von 220.000 bis 300.000 g/mol auf. Aufgrund des Molekulargewichtsabbau durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-a-Methstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Des weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt. Für XPS wird bevorzugt CO₂ oder Mischungen mit Alkoholen oder Ketonen eingesetzt.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden.

In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-%, bezogen auf das Styrolpolymerisat, eingesetzt werden können.

Zur Herstellung der erfindungsgemäßen expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Besonders bevorzugt wird ein Verfahren zur Herstellung von halogenfrei flammgeschützten, expandierbaren Styrolpolymeren (EPS), umfassend die Schritte
a) Einmischen eines organischen Treibmittels und 1-25 Gew.-% einer Phosphorverbindung der allgemeinen Formel (I) oder das Hydrolyseprodukt oder Metallsalz einer Phosphorverbindung der allgemeinen Formel (I), in die Polymerschmelze mittels statischen oder dynamischen Mischer bei einer Temperatur von mindestens 150°C,
b) Kühlen der treibmittel- und Styrolpolymerschmelze auf eine Temperatur von mindestens 120°C
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

Es ist auch möglich, die erfindungsgemäßen, expandierbaren Styrolpolymeren (EPS) durch Suspensionspolymerisation herzustellen.

Bei der Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylether oder a-Methylstyrol ersetzt sein.

Bei der Suspensionspolymerisation können die üblichen Hilfsmittel, wie z.B. Peroxidinitiatoren, Suspensionsstabilisatoren, Treibmittel, Kettenüberträger, Expandierhilfsmittel, Keimbildner und Weichmacher zugesetzt werden. Die Phosphorverbindung der Formel (I) wird bei der Polymerisation in Mengen von 0,5 bis 25 Gew.-%, vorzugsweise von 5 bis 15 Gew.-%, zugesetzt. Treibmittel werden in Mengen von 3 bis 10 Gew.-%, bezogen auf Monomer zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Bei der Suspensionspolymerisation entstehen perlförmige, im wesentlichen runde Teilchen mit einem mittleren Durchmesser im Bereich von 0,2 bis 2 mm.

Zur Verbesserung der Verarbeitbarkeit können die fertigen expandierbaren Styrolpolymergranulate durch Glycerinester, Antistatika oder Antiverklebungsmittel beschichten werden.

Das EPS Granulat kann mit Glycerinmonostearat GMS (typischerweise 0,25 %), Glycerintristearat (typischerweise 0,25 %) feinteiliger Kieselsäure Aerosil R972 (typischerweise 0,12 %) und Zn-Stearat (typischerweise 0,15 %), sowie Antistatikum beschichtet werden.

Die erfindungsgemäßen expandierbaren Styrolpolymergranulate können in einem ersten Schritt mittels Heißluft oder Wasserdampf zu Schaumpartikeln mit einer Dichte im Bereich von 8 bis 100 g/l vorgeschäumt und in einem 2. Schritt in einer geschlossenen Form zu Partikelformteilen verschweißt werden.

Die expandierbaren Polystyrolteilchen können zu Polystyrolschaumstoffen mit Dichten von 8 bis 200 g/l bevorzugt von 10 bis 50 g/l, verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

### Beispiele:

### Beispiel 1 - 3:

Zu einem Hauptstrom einer treibmittelhaltigen Polystyrolschmelze (PS 148G der BASF Aktiengesellschaft mit einer Viskositätszahl VZ von 83 ml/g, M_{W} = 220.000 g/mol, Uneinheitlichkeit M_{w}/Mₙ = 2,8 und 7 Gew.-% n-Pentan) wurde nach Abkühlen von ursprünglich 260 °C auf eine Temperatur von 190 °C über einen Seitenstromextruder in einer Polsytrolschmelze vorgemischtes 9,10-Dihydro-9-oxa-10-phospha-phenanthren-10-oxid (DOP) gemäß den Angaben in Tabelle 1 zudosiert (zugegebenen Mengen in Gewichtsprozent, bezogen auf Polysytrol). Die resultierende Polystyrolschmelze, wurde mit 60 kg/h durch eine Düsenplatte mit 32 Bohrungen (0,75 mm Durchmesser) gefördert. Mit Hilfe einer druckbeaufschlagten Unterwassergranulierung wurden kompakte Granulate mit enger Größenverteilung hergestellt.

### Beispiel 4

Beispiel 3 wurde wiederholt mit dem Unterschied, dass zusätzlich über den Seitenstromextruder Hexabromcyclodecan (HBCD, 0,2 Gew.-% bezogen auf EPS-Granulat) zudosiert wurde.

### Beispiel 5

Beispiel 3 wurde wiederholt mit dem Unterschied, dass zusätzlich über den Seitenstromextruder Dicumylperoxid (0,5 Gew.-% bezogen auf EPS-Granulat) zudosiert wurde.

### Beispiel 6

In 15,03 kg Styrol wurden 4,55 kg Polystyrol (PS 158K der BASF) gelöst und mit 9,10-Dihydro-9-oxa-1,0-phospha-phenanthren-10-oxid (DOP) (10 Gew.-% bezogen auf die Gesamtmenge an Styrol und Polystyrol) versetzt. Zusätzlich werden 45,6g Dicumylperoxid und 18,1g Dibenzoylperoxid zugegeben. Diese organische Phase wurde in 19,5l vollentsalztes Wasser in einem 50l Rührkessel eingebracht. Die wässrige Phase enthielt 69,8g Natriumphyrophosphat und 129,5g Magnesiumsulfat. Die Suspension wurde dann auf 80°C erhitzt. Nach 140 Minuten wurde 3,51g Emulgator K30 (Bayer AG) zugegeben. Nach weiteren 30 Minuten wurde1175 g Pentan dosiert und bei 134°C auspolymerisiert. Die erhaltenen EPS Perlen hatten einen mittleren Durchmesser von 1,2 mm.

Die in den Beispielen erhaltenen EPS-Granulate wurden in strömendem Wasserdampf zu Schaumstoffperlen mit einer Dichte von etwa 15 g/l vorgeschäumt, 24 Stunden zwischengelagert und anschließend in gasdichten Formen mit Wasserdampf zu Schaumstoffkörpern verschweißt.

Vor Untersuchung des Brandverhaltens wurden die Probenkörper für mindestens 72 Stunden gelagert. Für die Beurteilung des Brandverhaltens wurden die Schaumstoffkörper in einem Horizontalbrandtest 2 Sekunden lang mit einer Bunsenbrennerflamme beflammt und anschließend aus der Flamme entfernt. Es wurden die Nachbrennzeiten bestimmt.

**Tabelle 1. Brandverhalten der Schaumstoffkörper**

| Beispiel | DOP [%] | Nachbrennzeit [sec.] |
|---|---|---|
| 1 | 25 | 1 |
| 2 | 15 | 3 |
| 3 | 10 | 10 |
| 4 | 10 | 3 |
| 5 | 10 | 6 |
| 6 | 10 | 10 |

## Patentansprüche

1. Halogenfreie, flammgeschützte Polymerschaumstoffe, **dadurch gekennzeichnet, dass** sie als Flammschutzmittel eine Phosphorverbindung der allgemeinen Formel (I) 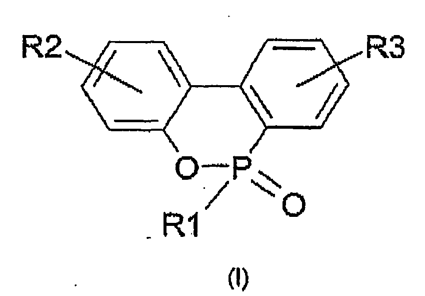 enthalten, wobei
R₁, R₂ und R₃ unabhängig voneinander
H, Methyl, Ethyl, tert.-Butyl, Pentyl, Hexyl, Vinyl, Cyclohexyl, α-Methylbenzyl, Phenyl, 1,4-Dihydroxyphenyl, 1,4-Dihydroxy-5- (tert-Butyl)-phenyl, 1,4-Dihydroxynaphtyl bedeuten,
oder das Hydrolyseprodukt oder Metallsalz einer Phosphorverbindung der allgemeinen Formel (I).

2. Halogenfreie, flammgeschützte Polymerschaumstoffe nach Anspruch 1, **dadurch gekennzeichnet, dass** sie als Flammschutzmittel 9,14-Dihydro-9-oxa-10-phosphaphenantren-10-oxid, dessen Hydrolyseprodukt oder Metallsalz enthalten.

3. Halogenfreie, flammgeschützte Polymerschaumstoffe nach Anspruch 1 oder 2, **dadurch gekennzeichnet, dass** sie die Phosphorverbindung der allgemeinen Formel (1) in einer Menge im Bereich von 0,5 bis 25 Gew.-%, bezogen auf den Polymerschaumstoff, enthalten.

4. Halogenfreie, flammgeschützte Polymerschaumstoffe nach einem der Ansprüche 1 bis 3, **dadurch gekennzeichnet, dass** sie eine Dichte im Bereich von 8 bis 200 g/l aufweisen.

5. Halogenfreie, flammgeschützte Polymerschaumstoffe nach einem der Ansprüche 1 bis 4, **dadurch gekennzeichnet, dass** mehr als 80 % der Zellen geschlossenzellig sind.

6. Halogenfreie, flammgeschützte Polymerschaumstoffe nach einem der Ansprüche 1 bis 5, **dadurch gekennzeichnet, dass** sie als Polymer ein Styrolpolymer enthalten.

7. Verfahren zur Herstellung von halogenfrei flammgeschützten, expandierbaren Styrolpolymeren (EPS) oder von flammgeschützten Styrolpolymerextrusionsschaumstoffen (XPS), **dadurch gekennzeichnet, dass** als Flammschutzmittel eine Phosphorverbindung der allgemeinen Formel (I) oder das Hydrolyseprodukt oder Metallsalz einer Phosphorverbindung der allgemeinen Formel (I) eingesetzt wird.

8. Verfahren zur Herstellung von halogenfrei flammgeschützten, expandierbaren Styrolpolymeren (EPS), umfassend die Schritte
a) Einmischen eines organischen Treibmittels und 1-25 Gew.-% einer Phosphorverbindung der allgemeinen Formel (I) oder das Hydrolyseprodukt oder Metallsalz einer Phosphorverbindung der allgemeinen Formel (I) in eine Styrolpolymerschmelze mittels statischen oder dynamischen Mischer bei einer Temperatur von mindestens 150°C,
b) Kühlen der treibmittelhaltigen Styrolpolymerschmelze auf eine Temperatur von mindestens 120°C,
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

9. Verfahren zur Herstellung von halogenfrei flammgeschützten, expandierbaren Styrolpolymeren (EPS) durch Polymerisation von Styrol in wässriger Suspension in Gegenwart eines organischen Treibmittels und eines Flammschutzmittels, **dadurch gekennzeichnet, dass** als Flammschutzmittel eine Phosphorverbindung der allgemeinen Formel (I) oder das Hydrolyseprodukt oder Metallsalz einer Phosphorverbindung der allgemeinen Formel (I) eingesetzt wird.

10. Halogenfrei flammgeschützte expandierbare Styrolpolymere (EPS), erhältlich nach einem der Ansprüche 7 bis 9.

11. Verfahren zur Herstellung von halogenfrei, flammgeschützten Polymerschaumstoffen nach Anspruch 1, **dadurch gekennzeichnet, dass** man expandierbare, Styrolpolymere gemäß Anspruch 10 in einem ersten Schritt mittels Heißluft oder Wasserdampf zu Schaumpartikeln mit einer Dichte im Bereich von 8 bis 200 g/l vorschäumt und in einem 2. Schritt in einer geschlossenen Form verschweißt.

## Claims

1. A halogen-free, flame-retardant polymer foam which comprises, as flame retardant, a phosphorus compound of the general formula (I) 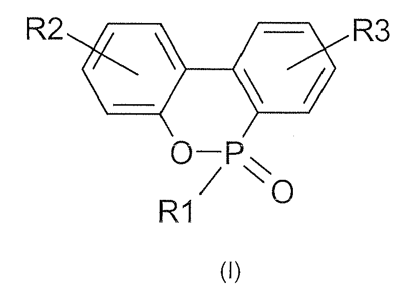 where
R₁, R₂, and R₃, independently of one another, are
H, methyl, ethyl, tert-butyl, pentyl, hexyl, vinyl, cyclohexyl, α-methylbenzyl, phenyl, 1,4-dihydroxyphenyl, 1,4-dihydroxy-5-(tert-butyl)phenyl, 1,4-dihydroxynaphthyl,
or the hydrolysis product or metal salt of a phosphorus compound of the general formula (I).

2. The halogen-free, flame-retardant polymer foam according to claim 1, which comprises, as flame retardant, 9,10-dihydro-9-oxa-10-phosphaphenanthrene 10-oxide, or its hydrolysis product or metal salt.

3. The halogen-free, flame-retardant polymer foam according to claim 1 or 2, which comprises an amount in the range from 0.5 to 25% by weight, based on the polymer foam, of the phosphorus compound of the general formula (I).

4. The halogen-free, flame-retardant polymer foam according to any of claims 1 to 3, whose density is in the range from 8 to 200 g/l.

5. The halogen-free, flame-retardant polymer foam according to any of claims 1 to 4, wherein more than 80% of the cells are closed cells.

6. The halogen-free, flame-retardant polymer foam according to any of claims 1 to 5, which comprises, as polymer, a styrene polymer.

7. A process for production of halogen-free flame-retardant, expandable styrene polymers (EPS) or of flame-retardant extruded styrene polymer foams (XPS), which comprises using, as flame retardant, a phosphorus compound of the general formula (I) or the hydrolysis product or metal salt of a phosphorus compound of the general formula (I).

8. A process for production of halogen-free flame-retardant, expandable styrene polymers (EPS), comprising the following steps:
a) mixing to incorporate an organic blowing agent and from 1-25% by weight of a phosphorus compound of the general formula (I) or the hydrolysis product or metal salt of a phosphorus compound of the general formula (I) into a styrene polymer melt by means of static or dynamic mixer at a temperature of at least 150°C,
b) cooling the styrene polymer melt comprising blowing agent to a temperature of at least 120°C,
c) discharge via a die plate with holes whose diameter at the die outlet is at most 1.5 mm, and
d) pelletizing the melt comprising blowing agent directly downstream of the die plate under water at a pressure in the range from 1 to 20 bar.

9. A process for production of halogen-free flame-retardant, expandable styrene polymers (EPS) via polymerization of styrene in an aqueous suspension in the presence of an organic blowing agent and of a flame retardant, which comprises using, as flame retardant, a phosphorus compound of the general formula (I) or the hydrolysis product or metal salt of a phosphorus compound of the general formula (I).

10. A halogen-free flame-retardant expandable styrene polymer (EPS), obtainable according to any of claims 7 to 9.

11. A process for production of halogen-free, flame-retardant polymer foams according to claim 1, which comprises, in a first step, using hot air or steam to prefoam expandable styrene polymers according to claim 10 to give foam beads whose density is in the range from 8 to 200 g/I and, in a 2nd step, fusing the materials in a closed mold.

## Revendications

1. Mousses polymères ignifugées, exemptes d'halogène, **caractérisées en ce qu'**elles contiennent en tant qu'agent ignifugeant un composé de phosphore de formule générale (I) : 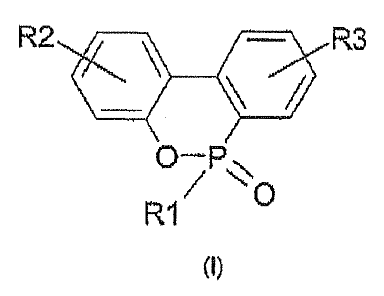 dans laquelle :
R₁, R₂ et R₃ signifient indépendamment les uns des autres H, un groupe méthyle, éthyle, tert-butyle, pentyle, hexyle, vinyle, cyclohexyle, α-méthylbenzyle, phényle, 1,4-dihydroxyphényle, 1,4-dihydroxy-5-(tert-butyl)-phényle, 1,4-dihydroxynaphtyle,
ou le produit d'hydrolyse ou le sel métallique d'un composé de phosphore de formule générale (I).

2. Mousses polymères ignifugées, exemptes d'halogène, selon la revendication 1, **caractérisées en ce qu'**elle contiennent de l'oxyde de 9,10-dihydro-9-oxa-10-phosphaphénantrène-10, le produit d'hydrolyse ou le sel métallique de celui-ci en tant qu'agent ignifugeant.

3. Mousses polymères ignifugées, exemptes d'halogène selon la revendication 1 ou 2, **caractérisées en ce qu'**elles contiennent le composé de phosphore de formule générale (I) en une quantité dans la plage de 0,5 à 25 % en poids, par rapport à la mousse polymère.

4. Mousses polymères ignifugées, exemptes d'halogène, selon l'une quelconque des revendications 1 à 3, **caractérisées en ce qu'**elles présentent une densité dans la plage de 8 à 200 g/l.

5. Mousses polymères ignifugées, exemptes d'halogène, selon l'une quelconque des revendications 1 à 4, **caractérisées en ce que** plus de 80 % des cellules sont des cellules fermées.

6. Mousses polymères ignifugées, exemptes d'halogène, selon l'une quelconque des revendications 1 à 5, **caractérisées en ce qu'**elles contiennent un polymère de styrène en tant que polymère.

7. Procédé pour la préparation de polymères de styrène pouvant être expansés (EPS), ignifugés exempts d'halogène, ou de mousses d'extrusion de polymère de styrène (XPS) ignifugées, **caractérisé en ce qu'**un composé de phosphore de formule générale (I) ou le produit d'hydrolyse ou le sel métallique d'un composé de phosphore de formule générale (I) est utilisé en tant qu'agent ignifugeant.

8. Procédé pour la préparation de polymères de styrène pouvant être expansés (EPS), ignifugés exempts d'halogène, comprenant les étapes consistant à :
a) mélanger un agent gonflant organique et 1 à 25 % en poids d'un composé de phosphore de formule générale (I) ou le produit d'hydrolyse ou le sel métallique d'un composé de phosphore de formule générale (I) dans une fusion de polymère de styrène grâce à un mélangeur statique ou dynamique à une température d'au moins 150°C,
b) refroidir la fusion de polymère de styrène contenant l'agent gonflant à une température d'au moins 120°C,
c) évacuer à travers une plaque de tuyères munie de perforations, dont le diamètre à la sortie des tuyères est d'au plus 1,5 mm, et
d) mettre sous forme de granulés la fusion contenant l'agent gonflant directement après la plaque de tuyères dans de l'eau à une pression dans la plage de 1 à 20 bars.

9. Procédé pour la préparation de polymères de styrène pouvant être expansés (EPS), ignifugés exempts d'halogène, par polymérisation de styrène en suspension aqueuse en présence d'un agent gonflant organique et d'un agent ignifugeant, **caractérisé en ce qu'**un composé de phosphore de formule générale (I) ou le produit d'hydrolyse ou le sel métallique d'un composé de phosphore de formule générale (I) est utilisé en tant qu'agent ignifugeant.

10. Polymères de styrène pouvant être expansés (EPS), ignifugés exempts d'halogène, que l'on peut obtenir selon l'une quelconque des revendications 7 à 9.

11. Procédé pour la préparation de mousses polymères ignifugées, exemptes d'halogène, selon la revendication 1, **caractérisé en ce que** des polymères de styrène, pouvant être expansés, selon la revendication 10 sont préexpansés dans une première étape grâce à de l'air chaud ou de la vapeur d'eau pour donner des particules de mousse ayant une densité dans la plage de 8 à 200 g/l et sont soudés dans une deuxième étape dans un moule fermé.
